# EUROPÄISCHE PATENTSCHRIFT

(11) **EP 3 088 161 B1**
(45) Veröffentlichungstag und Bekanntmachung des Hinweises auf die Patenterteilung: **06.01.2021**
(21) Anmeldenummer: 16000456.0
(22) Anmeldetag: 25.02.2016
(51) Int. Cl.: B29C 49/64, B29C 49/06, B29C 49/36, B29C 49/42, B29L 31/00

(54) **VERFAHREN UND AUFHEIZVORRICHTUNG ZUR TEMPERATURKONDITIONIERUNG VON VORFORMLINGEN SOWIE BLASFORMUNGSMASCHINE MIT EINER SOLCHEN VORRICHTUNG**
METHOD AND HEATING DEVICE FOR TEMPERATURE CONDITIONING OF PREFORMS AND BLOW MOLDING MACHINE WITH SUCH A DEVICE
PROCEDE ET DISPOSITIF DE CHAUFFAGE DESTINE AU CONDITIONNEMENT THERMIQUE D'EBAUCHES ET MACHINE DE MOULAGE PAR SOUFFLAGE COMPRENANT UN TEL DISPOSITIF

(30) Priorität: 28.04.2015 DE 102015005358
(43) Veröffentlichungstag der Anmeldung: 02.11.2016
(73) Patentinhaber: KHS Corpoplast GmbH, 22145 Hamburg (DE)
(72) Erfinder: Lewin, Frank, 22889 Tangstedt (DE); Ulutürk, Deniz, 22765 Hamburg (DE); Meyer, Niels, 22869 Schenefeld (DE)
(74) Vertreter: Hausfeld, Norbert

(56) Entgegenhaltungen:
- EP-A1- 2 749 397
- DE-A1- 2 427 611
- US-A- 4 147 487
- US-A- 4 571 173
- US-B1- 6 361 301

## Beschreibung

Die Erfindung betrifft eine Aufheizvorrichtung mit mehreren Heizeinrichtungen zur Temperaturkonditionierung von aus einem thermoplastischen Material bestehenden Vorformlingen auf eine für eine Blasumformung geeignete Temperatur und Temperaturverteilung. Die Aufheizvorrichtung, oft auch als Ofen bezeichnet, ist in der Regel z.B. Bestandteil einer Blasumformungsmaschine bzw. Blasmaschine. Die Aufheizvorrichtung weist Transportmittel auf, die Handhabungsmittel haltern, und die zusammen insofern auch als Transport- und Handhabungsmittel bezeichnet werden könnten, da sie gemeinsam dem Transport und der Handhabung der Vorformlinge durch die Aufheizvorrichtung entlang eines Transportweges dienen. Beim Durchlaufen der Aufheizvorrichtung überstreichen die Vorformlinge eine Bewegungsbahn. Die Transportmittel sind kettenartig miteinander verbunden und auf einer umlaufenden Kettenbahn geführt. Die Transportmittel sind also als eine auf einer umlaufenden Kettenbahn geführte Transportkette ausgeführt, wobei die Transportmittel jeweils die Kettenglieder bilden. Diese umlaufende Transportkette und die von dieser umlaufenden Kette beschriebene Kettenbahn gibt den Transportweg der Vorformlinge durch die Aufheizvorrichtung vor und bestimmt auch die Bewegungsbahn der Vorformlinge, also den von den Vorformlingen auf dem Transportweg überstrichenen Raumbereich. Die Transport- und Handhabungsmittel können zum Beispiel als von einer Transportkette gehalterte Transportdorne ausgebildet sein, letztere sind in vielfältiger Bauart im Stand der Technik bekannt. Die Transportmittel bilden die Kettenglieder und haltern die Handhabungsmittel für die Vorformlinge. Entlang einer Heizstrecke, die Teil des Transportweges der Vorformlinge durch die Aufheizvorrichtung ist, sind mehrere Heizeinrichtungen in Transportrichtung hintereinanderliegend stationär angeordnet. Diese Heizeinrichtungen können zum Beispiel Heizkästen nach dem Stand der Technik sein. Auf wenigstens einer den Heizeinrichtungen gegenüberliegenden Seite sind Reflektoren angeordnet, die im Bereich der Heizeinrichtungen mit diesen zusammen einen tunnelartigen Heizbereich ausbilden, durch den hindurch die Vorformlinge zum Zwecke der Aufheizung transportiert werden. Diese Reflektoren werden aufgrund ihrer Anordnung gegenüber den Heizeinrichtungen als Gegenreflektoren bezeichnet. Zusätzlich können Bodenreflektoren oder den Mündungsabschnitt der Vorformlinge schützende Mündungsreflektoren vorgesehen sein. Wenigstens im Bereich der Heizstrecke ist jedem Vorformling bzw. jedem Transport- und Handhabungsmittel ein mitlaufender Gegenreflektor zugeordnet, der mit dem Vorformling durch die Heizstrecke mitlaufend ausgeführt ist. Der Vorformling und der zugeordnete Gegenreflektor bewegen sich also zusammen durch die Heizstrecke.

Weiterhin betrifft die Erfindung ein Verfahren zur Temperaturkonditionierung von aus einem thermoplastischen Material bestehenden Vorformlingen auf eine für eine Blasumformung geeignete Temperatur und Temperaturverteilung. Diese Temperaturkonditionierung erfolgt in einer Aufheizvorrichtung, welche mehrere Heizeinrichtungen aufweist. Die Aufheizvorrichtung, oft auch als Ofen bezeichnet, ist in der Regel z.B. Bestandteil einer Blasumformungsmaschine bzw. Blasmaschine. Weiterhin weist diese Aufheizvorrichtung mehrere Transport- und Handhabungsmittel für den Transport und die Handhabung der Vorformlinge durch die Aufheizvorrichtung auf. Der Transport erfolgt entlang eines Transportweges innerhalb der Aufheizvorrichtung, wobei die Vorformlinge auf diesem Transportweg eine Bewegungsbahn überstreichen. Die Transportmittel sind also als eine auf einer umlaufenden Kettenbahn geführte Transportkette mit mehreren kettengliedartig zu der Transportkette verbundenen Transportmitteln ausgeführt. Diese umlaufende Transportkette und die von dieser umlaufenden Kette beschriebene Kettenbahn gibt den Transportweg der Vorformlinge durch die Aufheizvorrichtung vor und bestimmt auch die Bewegungsbahn der Vorformlinge, also den von den Vorformlingen auf dem Transportweg überstrichenen Raumbereich. Die Transport- und Handhabungsmittel können zum Beispiel als von einer Transportkette gehalterte Transportdorne ausgebildet sein, die in vielfältiger Bauart im Stand der Technik bekannt sind. Die Transportmittel bilden die Kettenglieder und haltern die Handhabungsmittel für die Vorformlinge. Entlang einer Heizstrecke, die Teil des genannten Transportweges der Vorformlinge durch die Aufheizvorrichtung ist, sind mehrere Heizeinrichtungen in Transportrichtung hintereinanderliegend stationär angeordnet. Diese Heizeinrichtungen können zum Beispiel Heizkästen nach dem Stand der Technik sein. Auf wenigstens einer den Heizeinrichtungen gegenüberliegenden Seite sind Reflektoren vorgesehen. Diese Reflektoren werden aufgrund ihrer Anordnung gegenüber den Heizeinrichtungen als Gegenreflektoren bezeichnet. Zusätzlich können Bodenreflektoren oder den Mündungsabschnitt der Vorformlinge schützende Kopfreflektoren vorgesehen sein. Die genannten Reflektoren bilden im Bereich der Heizeinrichtungen mit diesen zusammen einen tunnelartigen Heizbereich, durch den hindurch die Vorformlinge zum Zwecke der Aufheizung transportiert werden. Wenigstens im Bereich der genannten Heizstrecke wird jedem Vorformling bzw. jedem Transportmittel- und Handhabungsmittel ein mitlaufender Reflektor zugeordnet, der mit dem Vorformling mitläuft und mit ihm durch die Heizstrecke hindurch bewegt wird.

Die Erfindung betrifft weiterhin eine Blasformungsmaschine, auch Blasmaschine genannt, mit Blasstationen zur Blasumformung von Vorformlingen in Behälter mit einer wie eingangs definierten Aufheizvorrichtung.

Schließlich betrifft die Erfindung Transport- und Handhabungsmittel zur Verwendung in einer wie eingangs definierten Aufheizvorrichtung.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine, also innerhalb einer Vorrichtung zur blasumformenden Herstellung von Fertigbehältern aus Vorformlingen, unterschiedlichen Bearbeitungsstationen zugeführt. Typischerweise weist eine derartige Blasformungsmaschine bzw. Blasmaschine eine Aufheizvorrichtung sowie eine Blaseinrichtung auf, in deren Bereich der zuvor in der Aufheizvorrichtung temperierte Vorformling durch biaxiale Orientierung zu einem Behälter expandiert wird. Die Expansion erfolgt z.B. mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfasst auch die Druckgaseinleitung in die sich entwickelnde Behälterblase sowie die Druckgaseinleitung in den Vorformling zu Beginn des Blasumformvorganges bzw. Blasvorganges. Es sind auch andere Fluide zur Blasformung bekannt, insbesondere auch die Verwendung des in den Behälter abzufüllenden Füllgutes als Blasfluid. Die nachfolgende allgemeine Beschreibung erfolgt gleichwohl am Beispiel einer mit Druckgas arbeitenden Blasmaschine, ohne dass sich die Erfindung auf solche Blasmaschinen beschränkt.

Der grundsätzliche Aufbau einer Blasstation zur Behälterformung wird in der DE-OS 42 12 583 beschrieben. Möglichkeiten zur Temperaturkonditionierung der Vorformlinge werden in der DE-OS 23 52 926 erläutert. Auf die genannten Schriften wird explizit Bezug genommen und insofern erübrigt sich eine weitere Beschreibung zu Blasstationen und zur Temperaturkonditionierung.

Innerhalb der Vorrichtung zur Blasformung können die Vorformlinge sowie die geblasenen Behälter mit Hilfe unterschiedlicher Transport- und Handhabungseinrichtungen transportiert werden. Bekannt ist z.B. die Verwendung von Transportdornen, auf die die Vorformlinge aufgesteckt werden. Die Vorformlinge können aber auch mit anderen Trageinrichtungen gehandhabt und transportiert werden. Die Verwendung von Greifzangen zur Handhabung und zum Transport von Vorformlingen und die Verwendung von Klemmdornen, die zur Halterung in einen Mündungsbereich des Vorformlings einführbar sind, gehören ebenfalls zu den verfügbaren Konstruktionen.

Ein Transport und eine Handhabung von Behältern und Vorformlingen unter Verwendung von Übergaberädern wird beispielsweise in der DE-OS 199 06 438 bei einer Anordnung eines Übergaberades zwischen einem Blasrad und einer Ausgabestrecke und eines weiteren Übergaberades zwischen der Heizstrecke und dem Blasrad beschrieben.

Die bereits erläuterte Handhabung der Vorformlinge erfolgt zum einen bei den sogenannten Zweistufenverfahren, bei denen die Vorformlinge zunächst in einem Spritzgussverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgusstechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, nämlich auf einem sogenannten Blasrad, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Vor einer Durchführung der Beheizung werden die Vorformlinge typischerweise auf Transportdorne aufgesteckt, die den Vorformling entweder durch die gesamte Blasmaschine transportieren oder die lediglich im Bereich der Aufheizvorrichtung umlaufen. Bei einer stehenden Beheizung der Vorformlinge derart, dass die Mündungen der Vorformlinge in lotrechter Richtung nach unten orientiert sind, werden die Vorformlinge üblicherweise auf ein hülsenförmiges Halterungselement des Transportdornes aufgesteckt. Bei einer hängenden Beheizung der Vorformlinge, bei der diese mit ihren Mündungen in lotrechter Richtung nach oben orientiert sind, werden in der Regel Spreizdorne in die Mündungen der Vorformlinge eingeführt, die die Vorformlinge festklemmen. Aus dem Stand der Technik sind sowohl aktive, steuerbare als auch passive Klemmelemente bekannt. Passive Klemmelemente bewirken z.B. eine Klemmung aufgrund einer einwirkenden Federkraft, gegen die die Vorformlinge auf die Transportdorne aufgesteckt werden oder gegen die die Vorformlinge vom Transportdorn abgenommen werden, während bei den aktiven Transportdornen eine Betätigung erfolgen muss, z.B. aktorisch oder z.B. durch eine externe Kurvensteuerung, die den Klemmmechanismus auslöst bzw. den Klemmeingriff wieder aufhebt.

Zur Verkürzung der erforderlichen Aufheizzeit ist es bekannt, im Bereich der Heizstrecke NIR-Strahler zu verwenden, deren Heizstrahlung in einem nahen Infrarotbereich emittiert wird, typischerweise mit Wellenlängen zwischen 0,4 und 1 Mikrometer. Die Aufheizung der Vorformlinge erfolgt dabei primär durch Strahlungsabsorption beim Durchgang der NIR-Strahlung durch das Vorformlingsmaterial. Zur Optimierung der Energieausbeute werden derartige Heizstrecken mit einer Vielzahl von Spiegelflächen ausgestattet, um eine Absorption der Wärmestrahlung durch Bauteile der Heizstrecke möglichst zu vermeiden oder zumindest stark zu reduzieren, und um die NIR-Strahlung erneut zum Heizen auf den Vorformling zu reflektieren.

Typischerweise werden die Heizstrecken zumindest bereichsweise tunnelartig ausgebildet, und sie sind dazu z.B. auf der einen Seite vom Gehäuse einer Halterung für die Heizelemente sowie auf der gegenüberliegenden Seite von einem diesem Gehäuse gegenüberliegenden Reflektor begrenzt, nachfolgend als Gegenreflektor bezeichnet. Die DE 24 27 611 A1 zeigt z.B. stationär angeordnete Gegenreflektoren, die als gekrümmte Reflektoren ausgebildet sind. In vertikaler Richtung kann eine Begrenzung durch einen Boden und/oder einen Deckel erfolgen, je nachdem, ob die Vorformlinge mit ihren Mündungen in lotrechter Richtung nach oben oder nach unten orientiert durch die Heizstrecke hindurch transportiert werden. Auch diese vertikalen Begrenzungen können als Reflektoren ausgebildet werden. Es ist zudem üblich, den Mündungsbereich des Vorformlings z.B. mittels mitlaufender Reflektoren, nachfolgend als Mündungsreflektoren bezeichnet, gegen erwärmende Strahlung zu schützen, da dieser Bereich bereits fertig ausgeprägt hergestellt ist und bei der Blasformung keine weitere Verformung erfahren soll.

Es sind im Stand der Technik allerdings nicht nur den Heizelementen gegenüberliegend stationär angeordnete Gegenreflektoren bekannt, die zu unterscheiden sind von den vorstehend beschriebenen Boden- oder Mündungsreflektoren, sondern auch mit dem Vorformling mitlaufende Gegenreflektoren. So zeigt z.B. die US 4,147,487 eine Aufheizvorrichtung mit Transportmitteln in Form eines Transportdornes. Halbzylindrisch gewölbte und den Vorformling umgebende Gegenreflektoren sind auf der heizelementabgewandten Seite des Vorformlinges angeordnet. Diese Gegenreflektoren werden von dem gleichen Transportmechanismus bewegt, wie die Transportdorne, auf denen die Vorformlinge aufgesteckt sind. Die in dieser Schrift gezeigten Transportdorne laufen dabei mit den davon gehaltenen Vorformlingen durch die gesamte Blasformungsmaschine, sind also nicht als umlaufende Transportkette ausgebildet. Dies ergibt sich aus dem Umstand, dass der Transportdorn unter anderem auch mit zur Blasstation geführt ist. Einen gleichartigen Stand der Technik zeigt die US 4,571,173.

Auch die DE 10 2012 025 207 A1 und die EP 2 749 397 A1 zeigen mit den Vorformlingen mitlaufende Gegenreflektoren. Die Gegenreflektoren wandern mit der Handhabungseinrichtung entlang des Transportweges des Vorformlinges.

Es erweist sich als problematisch bei mit den Vorformlingen mitlaufenden Gegenreflektoren, dass diese einerseits möglichst formangepasst an die Vorformlinge ausgebildet sein sollten. Die Gegenreflektoren sollten die Vorformlinge auch in einem möglichst geringen Abstand umschließen. Aufgrund der gewünschten Formanpassung der Gegenreflektoren an die Vorformlingsaußenkontur müssen diese bei Wechsel des Vorformlingtyps ebenfalls ausgewechselt werden. Insofern wird bei dem bekannten Stand der Technik als nachteilig angesehen, dass dieser Austausch nicht in leichter und schneller Art erfolgen kann. Als weiteres Problem ergibt sich bei mitlaufenden Gegenreflektoren, dass diese das Bestücken und Entladen der Transport- und Handhabungsmittel mit den Vorformlingen in den Übergabebereichen zwischen der Aufheizvorrichtung und den vorgeschalteten bzw. nachgeschalteten Maschinenelementen der Blasmaschine nicht behindern sollten. Diese vorgeschalteten bzw. nachgeschalteten Maschinenelemente können z.B. Übergaberäder sein. Bei den bisher bekannten Konstruktionen wird dies dadurch erreicht, dass die Gegenreflektoren in einem größeren Abstand zu den Vorformlingen angeordnet werden, so dass z.B. die verwendeten Transportdorne freien Zugang zu den Vorformlingen haben und diese klemmend ergreifen können. Insbesondere ist der Abstand der Gegenreflektoren so bemessen, dass die Vorformlinge in vertikaler Richtung angehoben und abgesenkt werden können. Letzteres ist z.B. dann erforderlich, wenn ein Mündungsreflektor vorgesehen ist, der den Mündungsbereich des Vorformlinges gegen Wärmestrahlung abschirmen soll und der zu diesem Zweck als Platte mit einer Durchgangsöffnung ausgebildet ist. Der Vorformling wird bei solchen Mündungsreflektoren auf einem ersten Höhenniveau zugeführt, von einem Transportdorn klemmend ergriffen und anschließend in vertikaler Richtung auf ein zweites Höheniveau bewegt, nämlich in der Regel angehoben, bis der Vorformling seine gewünschte Position relativ zum Mündungsreflektor eingenommen hat. Diese gewünschte Position kann z.B. darin bestehen, dass der Neckring des Vorformlinges in der Öffnung des Mündungsreflektors aufgenommen ist. Zum Ausführen solcher Vertikalbewegungen und für das Heranführen des Transportdornes an den Vorformling muss der Gegenreflektor ausreichend Platz lassen und daher ist nach dem Stand der Technik der Abstand des Gegenreflektors zum Vorformling relativ groß bemessen. Wünschenswert wäre eine Anordnung des Gegenreflektors in noch dichterer Nähe zum Vorformling, um noch effektiver die Heizstrahlung auf den Vorformling zurückreflektieren zu können.

Die Aufgabe der vorliegenden Erfindung besteht darin einen Weg aufzuzeigen, die genannten Nachteile zu beseitigen. Es sollen Verfahren und Vorrichtungen bereitgestellt werden, mit denen bei mit den Vorformlingen mitlaufenden Gegenreflektoren eine möglichst dichte Anordnung der Gegenreflektoren relativ zu den Vorformlingen möglich ist, wobei die Gegenreflektoren nach Möglichkeit formangepasst zu den Vorformlingen ausgebildet sein sollen, und wobei die genannten Nachteile beseitigt sind.

Diese Aufgabe wird gelöst durch eine Aufheizvorrichtung mit den Merkmalen des Anspruchs 1, mit einem Verfahren gemäß den Merkmalen des Anspruchs 10, sowie mit einer Blasformungsmaschine mit den Merkmalen des Anspruchs 9.

Weitere vorteilhafte Ausgestaltungen sind Gegenstand der Unteransprüche oder ergeben sich aus vorteilhaften Weiterbildungen, die in der Figurenbeschreibung angegeben sind.

Erfindungsgemäß ist vorgesehen, dass die Gegenreflektoren an den kettengliedartigen Transportmitteln befestigt sind und sich in die Bewegungsbahn der Vorformlinge hineinerstrecken und die Vorformlinge in radialer Richtung teilweise umschließen. In der Regel sind die Vorformlinge mit einer zylindrischen Grundform ausgebildet, so dass auch die Gegenreflektoren entsprechend komplementär ausgebildet sind, nämlich im Falle von Vorformlingen mit zylindrischer Grundform mit einer entsprechend komplementär geformten zylindrischen Ausnehmung oder Wölbung, so dass der Gegenreflektor den Vorformling teilzylindrisch umschließen kann. In analoger Weise wird diese Aufgabe von einem Verfahren gelöst, bei dem die Gegenreflektoren an den kettengliedartigen Transportmitteln befestigt werden und sich in die Bewegungsbahn der Vorformlinge hineinerstrecken.

Aufgrund der Befestigung der Gegenreflektoren an den kettengliedartigen Transportmitteln ergeben sich eine Mehrzahl sicherer und energieoptimaler Gestaltungsmöglichkeiten, da geringe Abstände zwischen Gegenreflektor und Vorformling realisierbar sind. Es besteht dabei insbesondere keine Notwendigkeit der Synchronisierung zwischen der Bewegung der Gegenreflektoren und der Vorformlinge.

Um den Gegenreflektor besonders nahe am Vorformling positionieren zu können, ist mit Vorteil eine Beweglichkeit des Gegenreflektors relativ zu dem Transportmittel vorgesehen, an dem der Gegenreflektor z.B. befestigt ist. Diese Beweglichkeit kann z.B. eine in axialer Richtung sein, also in Längsrichtung des Vorformlinges, dem der Gegenreflektor zugeordnet wird. Es ist auch eine Beweglichkeit in radialer Richtung möglich, also quer zu der genannten axialen Richtung bzw. quer zu der Längsrichtung des zugeordneten Vorformlinges. Es sind auch Mischformen dieser beiden genannten Bewegungsrichtungen denkbar. Aufgrund dieser Möglichkeit einer Relativbewegung zwischen Gegenreflektor und Transportmittel kann der Gegenreflektor z.B. bedarfsweise aus einer ersten Position in eine davon verschiedene zweite Position wegbewegt werden, wobei diese zweite Position z.B. dadurch ausgezeichnet ist, dass der Abstand zum Vorformling vergrößert ist. Der Vorformling kann dadurch z.B. in vertikaler Richtung bewegt werden und der Zugang zum Vorformling ist dadurch für das Handhabungsmittel erleichtert oder erst ermöglicht. Wenn dieser Zugang nicht mehr benötigt wird oder wenn eine Vertikalbewegung des Vorformlinges oder eine andere Bewegung des Vorformlinges nicht mehr auszuführen ist, kann der Gegenreflektor wieder in die Ausgangsposition zurückbewegt werden, nämlich in die nahe am Vorformling befindliche Position.

Mit Vorteil weisen die Transportmittel für die Bewegung des Gegenreflektors Führungsmittel auf, an denen die Gegenreflektoren in der gewünschten Richtung verschieblich geführt sind. Es kann sich dabei z.B. um Führungsstifte handeln, die eine axiale oder radiale Führung gewährleisten. Auch hier sind Mischformen zwischen axialer und radialer Führungsrichtung möglich.

Mit Vorteil wird vorgeschlagen, dass die Gegenreflektoren federkraftbeaufschlagt in einer ersten Position gehalten sind. Dies unterstützt, dass die Gegenreflektoren in einer definierten Position gehalten sind und aufgrund der Federkraft auch in diese definierte Position zurückkehren können. Die Bewegung des Gegenreflektors aus der ersten in eine zweite Position erfolgt dann entgegen der Federkraft.

Mit Vorteil ist diese erste Position, in der der Gegenreflektor federkraftbeaufschlagt gehalten ist, die sogenannte Heizposition. Diese ist dadurch ausgezeichnet, dass sich der Gegenreflektor in die Bewegungsbahn des Vorformlings hinein erstreckt bzw. sich in geringer Entfernung zu dem Vorformling befindet. Diese Position wird deswegen als Heizposition bezeichnet, weil diese Position bevorzugt beim Durchlaufen der Heizstrecke eingenommen werden sollte, in der nämlich der Gegenreflektor seine eigentliche Funktion ausübt, nämlich die Heizstrahlung auf den Vorformling zu reflektieren. In dieser Heizposition umschließt der Gegenreflektor den Vorformling teilweise. Die Auslenkung aus dieser Heizposition in eine andere Position erfolgt dabei derart, dass der Abstand zwischen Gegenreflektor und Vorformling vergrößert wird. Insbesondere ist daran gedacht, dass diese Auslenkung so erfolgt, dass der Gegenreflektor sich nicht mehr in die Bewegungsbahn des Vorformlinges hinein erstreckt. Der Vorformling könnte also in seiner Transportrichtung weiter bewegt werden, ohne mit dem Gegenreflektor zu kollidieren. In dieser ausgelenkten Position ist der Vorformling zugänglich für ein Bestücken und Entladen der Transport- und Handhabungsmittel und für den handhabenden Zugriff von Handhabungsmitteln, z.B. von Greifzangen oder von Transferrädern.

Die Steuerung der Bewegung der Gegenreflektoren erfolgt mit Vorteil über eine Kurvensteuerung. Es wäre auch denkbar, Aktoren vorzusehen oder motorische Antriebe. In besonders einfacher Weise erfolgt die Steuerung aber über eine stationäre externe Steuerkurve. Der Gegenreflektor weist eine Kurvenrolle auf, die also mit dem Gegenreflektor umläuft und mit der externen Steuerkurve wechselwirkt. Diese Wechselwirkung mit der Steuerkurve führt zu der gewünschten Bewegung des Gegenreflektors in axialer und/oder radialer Richtung. Diese Bewegung wird mit Vorteil in einem Bereich ausgeführt, der außerhalb der Heizstrecke angeordnet ist. Insbesondere erfolgt diese Bewegung also z.B. in einem Bereich vor der Heizstrecke, um eine Bestückung der Handhabungsmittel mit den Vorformlingen zu ermöglichen. Insbesondere ist daran gedacht, die Bewegung der Gegenreflektoren im Bereich der Umlenkung der umlaufenden Kettenbahn auszuführen. In einem weiteren Bereich außerhalb der Heizstrecke, nämlich in einem Entnahmebereich für die Vorformlinge, sollte bevorzugt und mit Vorteil eine Bewegung der Gegenreflektoren erfolgen und die Steuerkurve entsprechend ausgebildet sein. In diesen Entnahmebereich muss ein handhabender Zugriff auf die Vorformlinge erfolgen, damit diese nach der Temperaturkonditionierung zu den Blasstationen weiter gefördert werden können. Auch hier erweist sich eine Bewegung der Gegenreflektoren zum Zwecke der Entnahme der Vorformlinge als vorteilhaft.

Eine Alternative zu der Beweglichkeit des Gegenreflektors stellt ein Mündungsreflektor dar, der radial nach außen U-förmig offen ausgebildet ist. Bei einem solchen Mündungsreflektor ist kein vertikaler Hub des Vorformlinges notwendig, sondern dieser kann in den U-förmig offen ausgebildeten Mündungsreflektor in horizontaler Richtung eingeführt und entnommen werden. Da keine Hubbewegung erforderlich ist, kann der Gegenreflektor dennoch formangepasst ausgeführt werden und den Vorformling eng benachbart umgeben, solange die Bewegung in horizontaler Richtung durch die Formgebung des Gegenreflektors nicht behindert ist.

Mit Vorteil wird dabei der Mündungsreflektor am Gegenreflektor angeordnet und ist dadurch Teil des Gegenreflektors. Der Mündungsreflektor und der Gegenreflektor können z.B. einteilig ausgebildet sein. Es ist auch denkbar, den Mündungsreflektor verschieblich am Gegenreflektor anzuordnen, z.B. um eine Kollision mit Übergaberädern oder mit Übergabezangen zu vermeiden.

Bei einem Wechsel des Vorformlingtyps bzw. bei einer Änderung der Vorformlingsgeometrie aufgrund einer Umstellung der zu blasenden Behälter ist eine Austauschbarkeit der Gegenreflektoren wünschenswert und erforderlich. Insofern wird mit Vorteil vorgeschlagen, dass der Gegenreflektor mit einem Schnellwechselsystem an den Transportmitteln befestigt ist. Insbesondere wird mit Vorteil vorgeschlagen, dass das gewählte Schnellwechselsystem werkzeuglos betätigbar ist. Auch dies führt zu einer Verkürzung der Wechselzeiten bei Austausch der Gegenreflektoren.

Die Vorteile der erfindungsgemäßen Blasformungsmaschine, der erfindungsgemäßen Verfahren und der erfindungsgemäßen Transport- und Handhabungsmittel ergeben sich in analoger Weise aus den vorstehenden Erläuterungen zu den Vorteilen der erfindungsgemäßen Vorrichtung.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine Seitenansicht einer Haltevorrichtung aus dem Stand der Technik,
- Fig. 6: einen Vertikalschnitt gemäß Schnittlinie VI in Fig. 5,
- Fig. 7a, 7b: perspektivische Ansichten eines Transport- und Handhabungsmittels mit daran befestigtem Gegenreflektor in einer ersten und einer zweiten Gegenreflektorposition,
- Fig. 8: einen Längsschnitt durch eine Heizeinrichtung, einen Transportdorn und einen Gegenreflektor im Bereich der von einem Vorformling und dem Gegenreflektor gemeinsam durchlaufenen Heizstrecke,
- Fig. 9a, 9b und 9c: perspektivische Ansichten eines Transport- und Handhabungsmittels mit daran befestigtem Gegenreflektor in einer zweiten Ausführungsvariante in einer ersten und einer in radialer Richtung dazu verschobenen zweiten Gegenreflektorposition,
- Fig. 10a, 10b und 10c: perspektivische Ansichten eines erfindungsgemäßen Transport- und Handhabungsmittels mit daran befestigtem Gegenreflektor mit einem Mündungsreflektor.

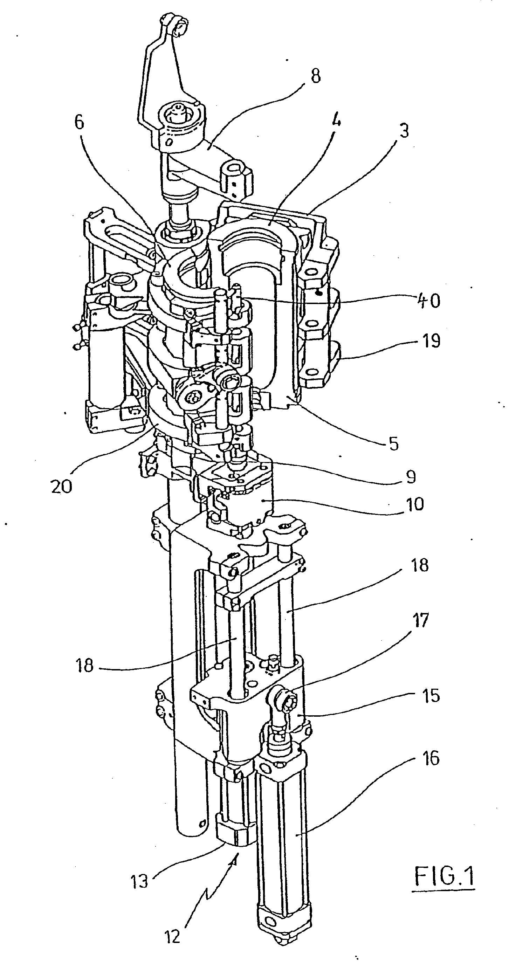

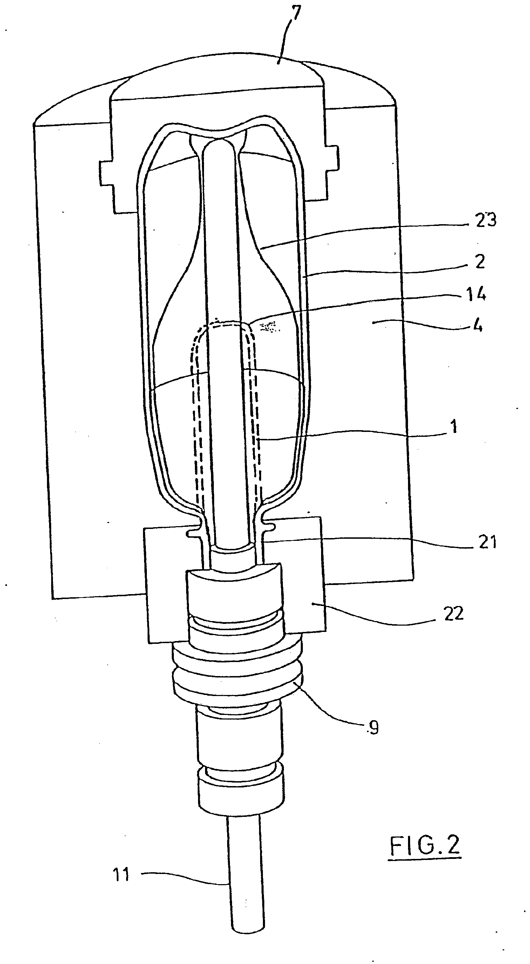

Der prinzipielle Aufbau einer Vorrichtung zur Umformung von Vorformlingen (1) in Behälter (2) ist in Fig. 1 und in Fig. 2 dargestellt. Die Anordnung kann dabei wie dargestellt oder in einer vertikalen Ebene um 180° gedreht erfolgen.

Die Vorrichtung zur Formung des Behälters (2) besteht im Wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Halteelement (9) fixiert sein. Dieses Halteelement (9) kann z.B. erfindungsgemäß oder wie im Stand der Technik bekannt ausgebildet sein. Es ist beispielsweise möglich, den Vorformling (1) über Zangen oder andere Handhabungsmittel direkt in die Blasform (4) einzusetzen. Zur Ermöglichung einer Druckluftzuleitung ist unterhalb der Blasform (4) ein Anschlusskolben (10) angeordnet, der dem Vorformling (1) Druckluft zuführt und gleichzeitig eine Abdichtung vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn mehrere Blasstationen (3) auf einem rotierenden Blasrad (25) angeordnet sind.

Bei der in Fig. 1 dargestellten Ausführungsform ist das Recksystem derart ausgebildet, dass eine Tandemanordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, dass von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (40). Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

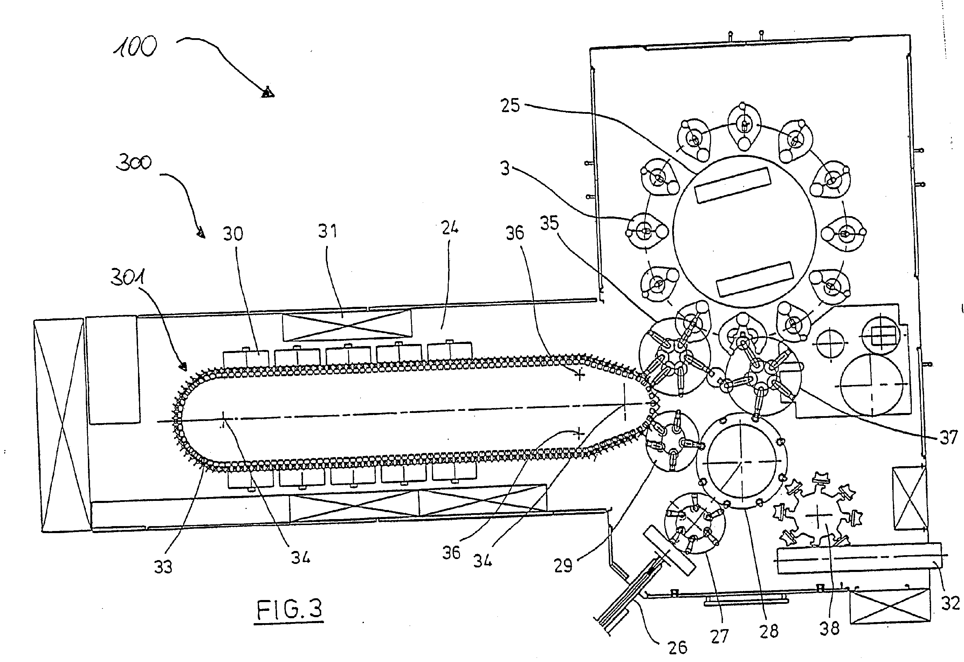

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) als Heizeinrichtungen sowie Gebläse (31) angeordnet, um die Vorformlinge (1) zu temperieren. Nach einer ausreichenden Temperierung der Vorformlinge (1) werden diese von einem Übergaberad (35) an das Blasrad (25) übergeben, in dessen Bereich die Blasstationen (3) angeordnet sind. Die fertig geblasenen Behälter (2) werden von weiteren Übergaberädern (37, 28, 38) einer Ausgabestrecke (32) zugeführt. Das Übergaberad (37) ist dabei als ein Entnahmerad und das Übergaberad (38) als ein Ausgaberad ausgebildet.

Um einen Vorformling (1) derart in einen Behälter (2) umformen zu können, dass der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden. Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Pressluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, dass bei der dargestellten Ausführungsform die Heizstrecke (24) Teil des Transportweges der Vorformlinge (1) ist. Der Transport der Vorformlinge (1) erfolgt in der Aufheizvorrichtung (300) mittels einer Vielzahl umlaufender Transportelemente (33), die kettenartig aneinandergereiht und entlang von Umlenkrädern (34, 36) geführt sind. Die umlaufenden Transportelemente (33) bewegen sich also entlang einer Kettenbahn (301), die auch die Transportbahn der Vorformlinge bildet, da die Vorformlinge (1) entlang der Kettenbahn (301) geführt sind. Insbesondere ist daran gedacht, durch die kettenartige Anordnung der Transportelemente (33) eine im Wesentlichen rechteckförmige Grundkontur aufzuspannen. Bei der dargestellten Ausführungsform werden im Bereich der dem Übergaberad (27) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (27) und des Blasrades (25) relativ zueinander erweist sich die dargestellte Anordnung als besonders zweckmäßig, da im Bereich der entsprechenden Ausdehnung des Transportweges (301) drei Umlenkräder (34, 36) positioniert sind, und zwar jeweils die kleineren Umlenkräder (36) im Bereich der Überleitung zu den linearen Verläufen des Transportweges (301) und das größere Umlenkrad (34) im unmittelbaren Übergabebereich zum Übergaberad (27) und zum Blasrad (25). Alternativ zur Verwendung von kettenartigen Transportelementen (33) ist es beispielsweise auch möglich, ein rotierendes Heizrad zu verwenden.

Nach einem fertigen Blasen der Behälter (2) werden diese vom Übergaberad (38) aus dem Bereich der Blasstationen (3) herausgeführt und zur Ausgabestrecke (32) transportiert.

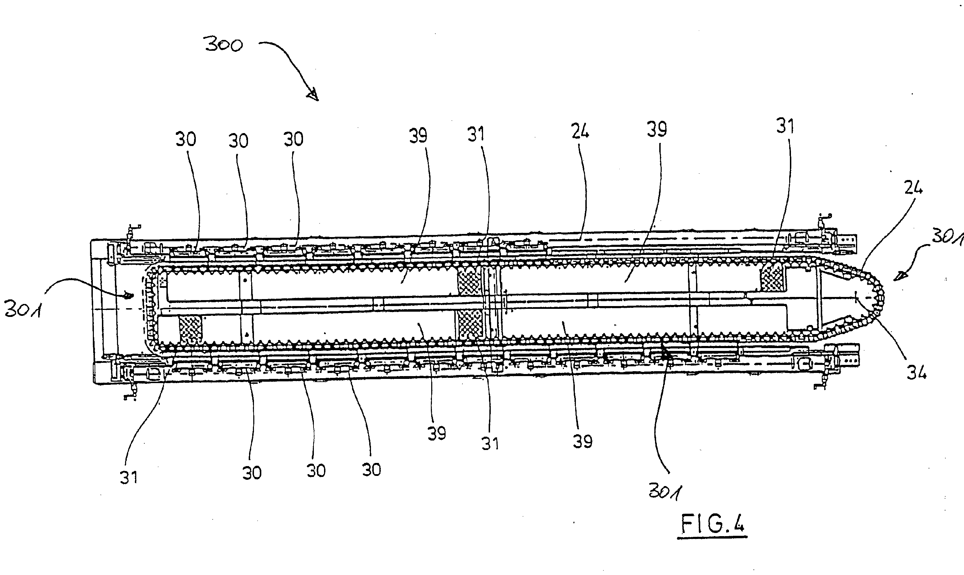

In der in Fig. 4 dargestellten modifizierten Aufheizvorrichtung (300) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im Wesentlichen quer zu einer Transportrichtung der Vorformlinge (1) realisiert. Die Kühlluftkanäle (39) können im Bereich von den Heizstrahlern (30) gegenüberliegenden Oberflächen Gegenreflektoren für die Heizstrahlung bereitstellen, ebenfalls ist es möglich, über die abgegebene Kühlluft auch eine Kühlung der Heizstrahler (30) zu realisieren.

Ein Transport der Vorformlinge (1) und der Behälter (2) durch die Blasmaschine (100) kann in unterschiedlicher Art und Weise erfolgen. Gemäß einer Ausführungsvariante werden die Vorformlinge zumindest entlang des wesentlichen Teiles ihres Transportweges von Transportdornen getragen. Es ist aber auch möglich, einen Transport der Vorformlinge unter Verwendung von Zangen durchzuführen, die außenseitig am Vorformling angreifen, oder Innendorne zu verwenden, die in einen Mündungsbereich des Vorformlings eingeführt werden. Ebenfalls sind hinsichtlich der räumlichen Orientierung der Vorformlinge unterschiedliche Varianten denkbar.

Gemäß einer Variante wird der Vorformling im Bereich der Vorformlingseingabe (26) mit seiner Mündung in lotrechter Richtung nach oben orientiert zugeführt, anschließend gedreht, entlang der Heizstrecke (24) und des Blasrades (25) mit seiner Mündung in lotrechter Richtung nach unten orientiert gefördert und vor einem Erreichen der Ausgabestrecke (32) wieder gedreht. Gemäß einer anderen Variante wird der Vorformling (2) im Bereich der Heizstrecke (24) mit seiner Mündung in lotrechter Richtung nach unten orientiert beheizt, vor Erreichen des Blasrades (25) jedoch wieder um 180° gedreht.

Gemäß einer dritten Ausführungsvariante durchläuft der Vorformling den gesamten Bereich der Blasmaschine (100) ohne Durchführung von Wendevorgängen mit seiner Mündung in lotrechter Richtung nach oben orientiert.

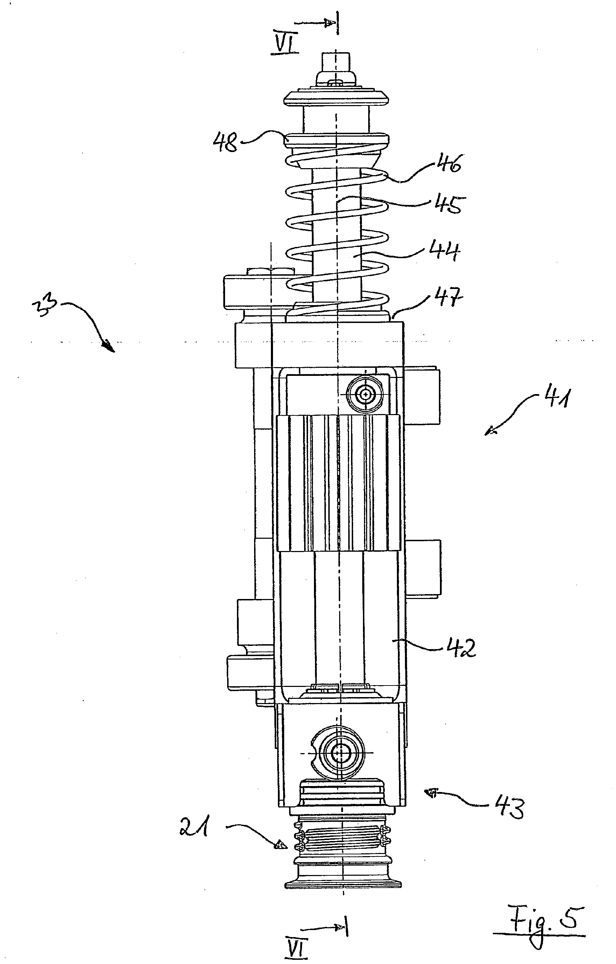

Fig. 5 zeigt eine teilweise Darstellung einer Seitenansicht eines Vorformlings (1), in dessen Mündungsabschnitt (21) bereichsweise eine aus dem Stand der Technik bekannte Haltevorrichtung (41) eingeführt ist. Diese Haltevorrichtung (41) ist zusammen mit dem Transportelement (33) ein Beispiel für ein Transport- und Handhabungsmittel im Sinne der Patentansprüche. In den schematischen Figuren 3 und 4 ist jeweils nur das Bezugszeichen 33 angegeben für die kettenartig verbundenen Transportelemente.

Die beispielhaft gezeigte Haltevorrichtung (41) weist eine Elementbasis (42), einen dem Vorformling (1) zugewandten Kopf (43) sowie einen mit dem Kopf (43) verbundenen Schaft (44) auf. Der Schaft (44) mit dem Kopf (43) ist relativ zur Elementbasis (42) in Richtung einer Elementlängsachse (45) beweglich. Eine Grundposition des Schaftes (44) relativ zur Elementbasis (42) kann von einer Feder (46) vorgegeben werden. Die Feder (46) ist beim dargestellten Ausführungsbeispiel zwischen einer Oberseite (47) der Elementbasis (42) und einem seitlich über den Schaft (44) überstehenden Endsegment (48) angeordnet.

Gemäß einem typischen Ausführungsbeispiel können eine Mehrzahl von Elementbasen (42) kettenartig miteinander verbunden werden oder mit einer umlaufenden Transportkette verbunden werden. Es ergibt sich dadurch eine Anordnung, wie sie in den Figuren 3 und 4 gezeigt ist. Die Haltevorrichtung (41) kann aber auch an umlaufenden Übergaberädern oder sonstigen Einrichtungen angebracht sein. Ebenfalls erfolgt gemäß einem typischen Ausführungsbeispiel eine Positionierung des Schaftes (44) relativ zur Elementbasis (42) kurvengesteuert über eine Kurve, die sich zumindest abschnittweise entlang eines Transportweges des Tragelementes (41) erstreckt.

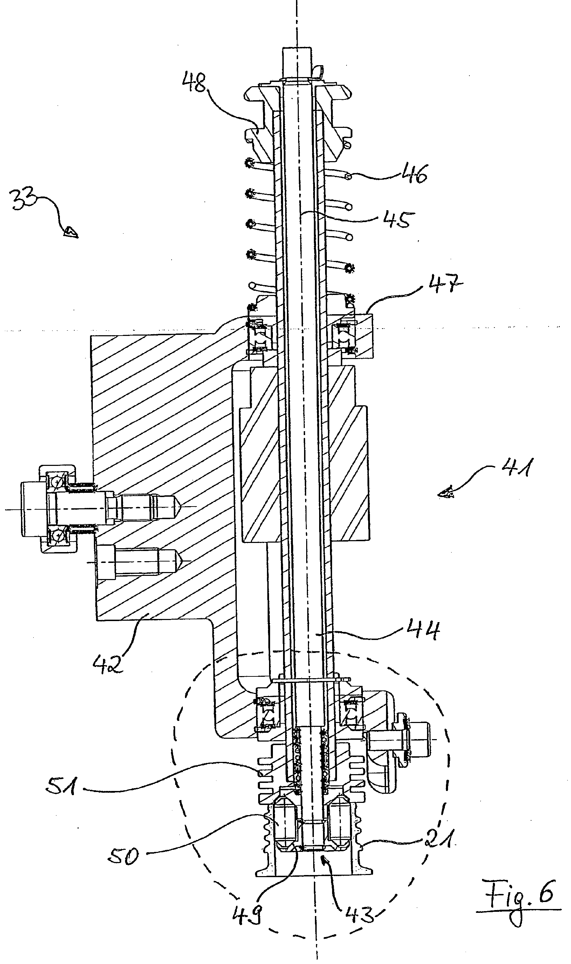

Fig. 6 zeigt in einem Längsschnitt die Positionierung des Kopfes (43) innerhalb eines Mündungsabschnittes (21) eines Vorformlings (1) oder eines Behälters (2). Es ist zu erkennen, dass der Kopf (43) Vertiefungen (49) aufweist, in denen Klemmelemente (50) angeordnet sind. Außerhalb des in den Mündungsabschnitt (21) einführbaren Bereiches kann der Kopf (43) einen Kühlkörper (51) aufweisen, der mit Kühlrippen zur Wärmeabstrahlung versehen ist.

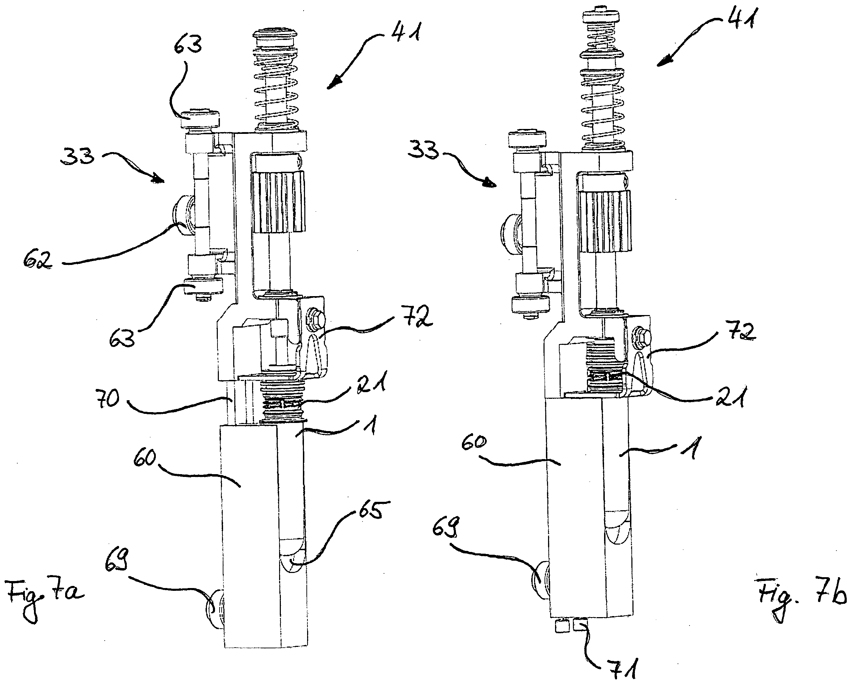

Die Figuren 7a und 7b zeigen ein erstes Ausführungsbeispiel für erfindungsgemäß ausgeführte Transport- und Handhabungsmittel (33, 41) mit einem daran befestigten Gegenreflektor (60). Die Fig. 7a zeigt den Gegenreflektor (60) in einer abgesenkten Position, während die Fig. 7b die Grundstellung des Gegenreflektors (60) zeigt. Diese Grundstellung wird federbelastet gehalten, wobei sich diese Feder in nicht dargestellter Weise im Inneren des Gegenreflektors (60) befindet und eine Federkraft ausübt gegen eine absenkende Bewegung des Gegenreflektors (60).

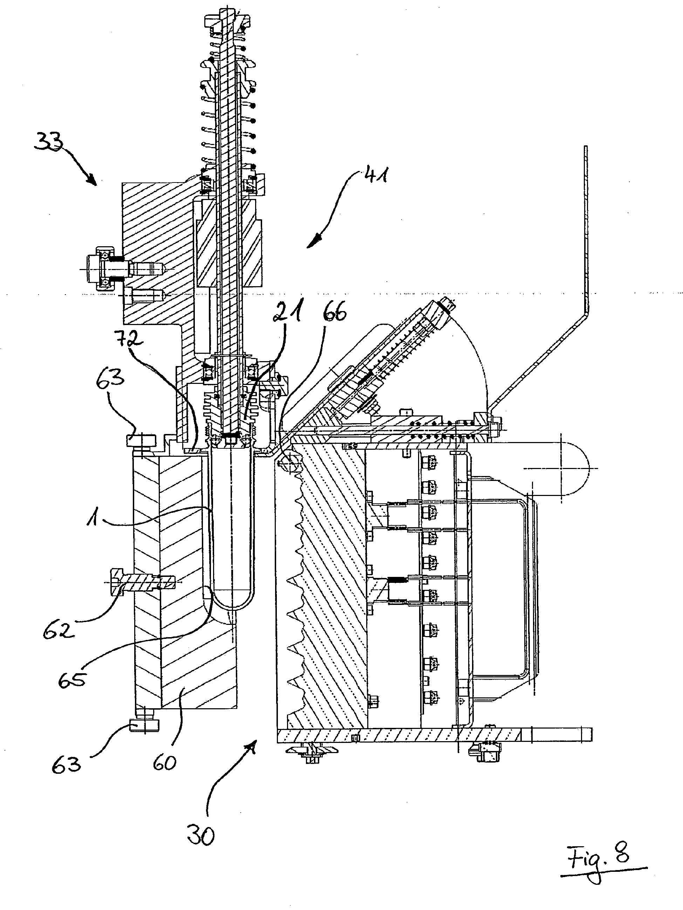

Das erfindungsgemäße und als Ausführungsbeispiel dargestellte Transport- und Handhabungsmittel (33, 41) besteht aus einem Transportelement (33) sowie aus einer davon gehalterten Haltevorrichtung (41), wie sie vorstehend zu den Figuren 5 und 6 exemplarisch beschrieben wurden. Zusätzlich weist das dargestellte Transport- und Handhabungsmittel (33, 41) einen am Transportelement (33) in axialer Richtung verschieblich gelagerten Gegenreflektor (60) auf. Dieser Gegenreflektor (60) hat auf seiner vorformlingszugewandten Seite eine Ausnehmung (65) mit zu dem Vorformling (1) formangepasster Innenkontur. Der dargestellte Vorformling (1) wird von der Ausnehmung (65) teilweise aufgenommen und mit Bezug auf Fig. 8 teilzylindrisch und bevorzugt weitgehend äquidistant umgeben. Auf seiner vorformlingsabgewandten Außenseite ist z.B. eine Steuerrolle (69) angeordnet, die mit einer nicht dargestellten externen Steuerkurve zusammenwirkt.

Der Gegenreflektor (60) ist an Führungsstiften (70) in axialer Richtung geführt. Diese Führungsstifte (70) sind ortsfest an dem Transportelement (33) befestigt und erstrecken sich vom Transportelement (33) aus in vertikaler Richtung nach unten. Der Gegenreflektor (60) weist Führungsbohrungen auf, die in der gewählten Darstellung nicht erkennbar sind. Die Führungsstifte (70) verlaufen in diesen Führungsbohrungen. Gegen ein Herunterfallen in vertikaler Richtung ist der Gegenreflektor (60) durch Schnellverschlussschrauben (71) gesichert, die in der in Fig. 7b gezeigten Grundposition bodenseitig über den Gegenreflektor (60) überstehen und z.B. zum Zwecke des Wechsels des Gegenreflektors (60) werkzeuglos gelöst werden können.

Die Haltevorrichtung (41) in den Figuren 7a und 7b ist als Transportdorn ausgeführt, wie er z.B. zu den Figuren 5 und 6 beschrieben wurde. In der in Fig. 7a gezeigten Stellung dieses Transportdornes ist der Kopf (43) im Mündungsabschnitt (21) des Vorformlings (1) eingetaucht. Der Vorformling (1) befindet sich in einer abgesenkten Position unterhalb des Mündungsreflektors (72). In Fig. 7b befindet sich der Vorformling (1) und der den Vorformling (1) tragende Transportdorn in einer angehobenen Position, in der der Mündungsabschnitt (21) des Vorformlings (1) so weit angehoben ist, dass der Mündungsreflektor (72) den Mündungsabschnitt (21) gegen Heizstrahlung abschirmt, wie dies in Fig. 8 in einer Schnittdarstellung erkennbar ist.

In der in Fig. 7a dargestellten Positionierung des Gegenreflektors (60), die durch die externe Steuerkurve vorgegeben wird, erhält der Vorformling (1) in vertikaler Richtung Bewegungsfreiheit, um die in Fig. 7a dargestellte Positionierung einzunehmen, die z.B. der Übergabepositionierung von einem Übergaberad entspricht. Die dargestellte Positionierung des Gegenreflektors (60) und des Vorformlings (1) wird also z.B. im Bereich des Übergaberades (29) der Fig. 3 eingenommen. Auch im Bereich des Entnahmerades (35) wird eine wie in Fig. 7a dargestellte Positionierung von Gegenreflektor (60) und Vorformling (1) eingenommen, während die in Fig. 7b dargestellte Positionierung beim Durchlaufen der Heizstrecke (24) eingenommen wird. Diese Positionierung ist auch in der Schnittstellung der Fig. 8 dargestellt, in der ein Heizkasten durchlaufen wird.

Fig. 8 zeigt einen Schnitt im Bereich der Heizstrahler (30) durch ein Transport- und Handhabungsmittel (33, 41) mit einem mitlaufenden Gegenreflektor (60). Im dargestellten Ausführungsbeispiel nimmt der Gegenreflektor (60) die in Figur 7b gezeigte Heizposition ein, das heißt der Gegenreflektor (60) befindet sich in einer vorformlingsnahen Positionierung, das heißt mit geringer Entfernung zum Vorformling (1). Der Gegenreflektor (60) ist am Transportelement (33) befestigt. Das Transportelement (33) haltert zudem die Haltevorrichtung (41), die z. B. in der zu den Fig. 5 und 6 erläuterten Weise ausgebildet sein kann. Zu der Heizeinrichtung (30) ist lediglich ein Heizelement (66) gezeigt, wobei in der Regel im Bereich der Heizstrecke (24) mehrere Heizelemente (66) in lotrechter Richtung übereinanderliegend angeordnet sind. Diese weiteren Heizelemente wären also unterhalb des dargestellten Heizelementes (66) über die Höhenerstreckung des Vorformlinges (1) verteilt angeordnet.

In Fig. 8 ist erkennbar, dass der mitlaufende Gegenreflektor (60) vorformlingszugewandt eine formangepasste Innenkontur (65) aufweist, um den Vorformling (1) möglichst äquidistant über dessen reflektorzugewandten Teilumfangsbereich in geringer Entfernung zu umgeben. Auf diese Weise kann die vom Heizelement (66) emittierte Heizstrahlung effektiv reflektiert und auf den Vorformling (1) zurückgeworfen werden. Da der mitlaufende Gegenreflektor (60) wie z.B. aus Fig. 7a ersichtlich z.B. in den Umlenkbereichen der Kettenbahn (301) und z.B. kurvengesteuert von dem Transportelement (33) wegbewegt wird, besteht dennoch Bewegungsfreiraum für den Vorformling (1) zu bzw. von dem Transportelement (33) und zu und von der davon gehalterten Haltevorrichtung (41) wegbewegt zu werden, wie er für typische Aufsteck- und Abnehmvorgänge benötigt wird, z.B. im Zusammenspiel mit im Stand der Technik bekannten Greifzangen oder Übergaberädern. Insbesondere kann eine Höhenbewegung des Transportelementes (33) bzw. der Haltevorrichtung (41) ausgeführt werden, ohne mit dem Gegenreflektor (60) zu kollidieren.

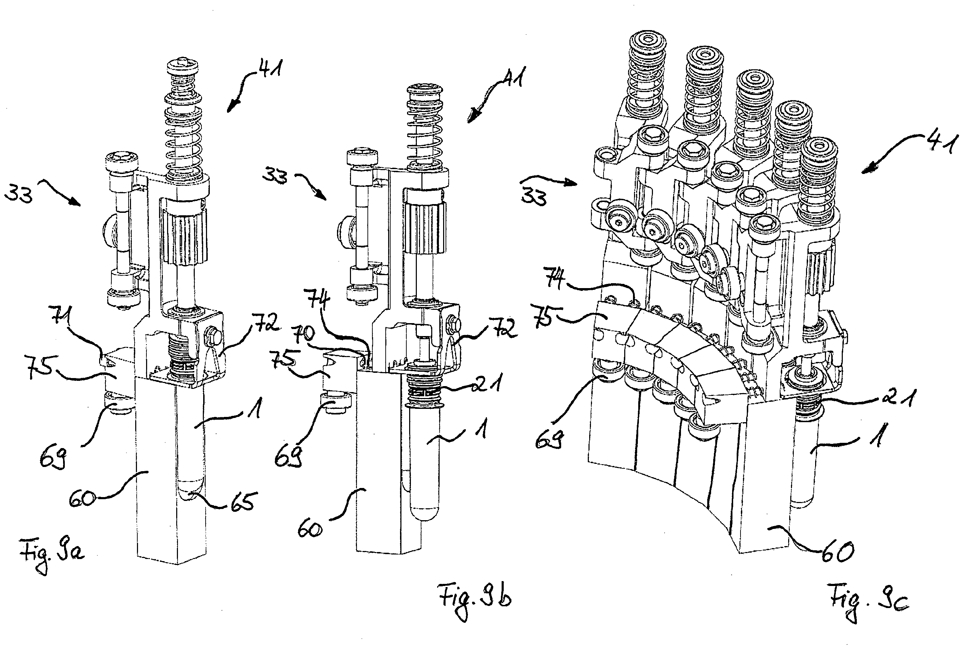

Die Figuren 9a, 9b und 9c zeigen in perspektivischen Ansichten erfindungsgemäße Transport- und Handhabungsmittel (33, 41) mit daran befestigten Gegenreflektoren (60) gemäß einer zweiten Ausführungsvariante. Während gemäß der Ausführungsvariante der Figuren 7a und 7b eine Bewegung des Gegenreflektors (60) relativ zum Transportelement (33) in vertikaler Richtung bzw. in axialer Richtung des Vorformlings (1) erfolgte, erfolgt gemäß dem Ausführungsbeispiel der Figuren 9a bis 9c eine Relativbewegung zwischen dem Gegenreflektor (60) und dem Transportelement (33) in einer radialen Richtung vom Vorformling (1) weg. Es sollen nachfolgend nur die Änderungen gegenüber der Ausführungsform der Fig. 7a und 7b beschrieben werden.

Fig. 9c zeigt einen Teilauschnitt zu der z.B. in Fig. 3 gezeigten Transportkette (301), nämlich in einem Umlenkbereich, insbesondere im Bereich des Übergaberades (35) oder des Eingaberades (29). Entsprechend zeigt die aus mehreren Transportelementen (33) zusammengefügte Transportkette (301) einen gekrümmten Verlauf. Aufgrund dieses gekrümmten Verlaufes ergeben sich zwischen benachbarten Gegenreflektoren (60) Spalte. In der in Fig. 9c dargestellten Positionierung der Gegenreflektoren (60) sind diese Spalte kaum noch erkennbar, weil die Gegenreflektoren (60) radial nach innen verschoben sind. Besser erkennbar sind die Spalte zwischen den Transportelementen (33) oberhalb der von diesen gehalterten Gegenreflektoren (60).

In der in Fig. 9a dargestellten Positionierung nimmt der Gegenreflektor (60) seine Grundstellung ein, in der er federkraftbeaufschlagt gehalten ist. Diese Federkraft wird von einer Feder (74) aufgebracht, die spiralförmig auf radial nach innen weisenden Führungsstiften (70) angeordnet ist. Die Führungsstifte (70) befinden sich auf der vorformlingsabgewandten Seite des Transportelementes (33) und erstrecken sich in radialer Richtung bis zu einem Führungselement (75) des Gegenreflektors (60). Dieses Führungselement (75) weist Führungsbohrungen auf, in die die Führungsstifte (70) eingreifen. Eine Schnellverschlussschraube (71) sorgt dafür, dass der Gegenreflektor (60) verschieblich auf den Führungsstiften (70) gehalten ist. Das Führungselement (75) weist weiterhin eine Steuerrolle (69) auf, die mit einer nicht dargestellten externen Steuerkurve in aus dem Stand der Technik bekannter Weise zusammenwirkt.

In der in Fig. 9a dargestellten Positionierung umgibt der Gegenreflektor (60) den Vorformling (1) mit geringem Abstand. Der Vorformling (1) ist in einer angehobenen Positionierung gezeigt, d.h. der Mündungsbereich (21) ist durch den Mündungsreflektor (72) gegen Heizstrahlung abgeschirmt.

In der in Fig. 9b dargestellten Positionierung ist der Gegenreflektor (60) kurvengesteuert aus seiner Grundstellung in radialer Richtung verschoben, so dass der Vorformling (1) in der dargestellten Weise abgesenkt werden kann. Es ist nunmehr möglich, den Vorformling (1) z.B. zu übergeben an ein Übergaberad (29, 35).

Die in Fig. 9b dargestellte Positionierung ist auch in Fig. 9c eingenommen und entspricht z.B. der im Bereich der Übergaberäder (35, 29) gewünschten Positionierung. Demgegenüber entspricht die in Fig. 9a dargestellte Positionierung der im Bereich der Heizstrecke (24) gewünschten Anordnung von Gegenreflektor (60) und Vorformling (1).

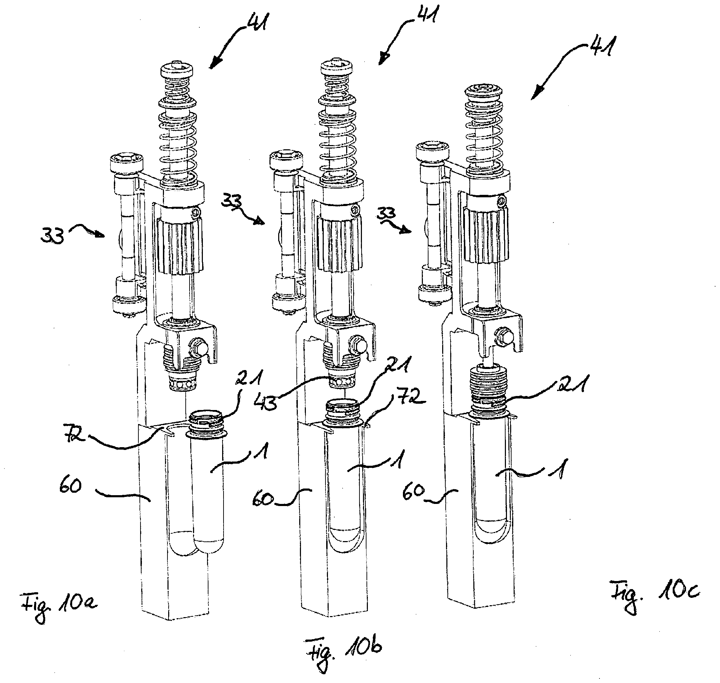

Die Figuren 10a bis 10c zeigen perspektivische Ansichten eines dritten Ausführungsbeispieles der Erfindung. Auch hier werden nur die gegenüber den Fig. 7 bis 9 vorhandenen Änderungen beschrieben.

Der Gegenreflektor (60) ist in diesem gezeigten Ausführungsbeispiel ortsfest mit dem Transportelement (33) verbunden. Um dennoch eine Entnahme oder einen Beladevorgang der Vorformlinge (1) zu ermöglichen, ist der Mündungsreflektor (72) in besonderer Weise ausgestaltet. Dieser Mündungsreflektor (72) ist an dem Gegenreflektor (60) angeordnet und weist ein in Vorformlingsrichtung offenes U-Profil auf. Dadurch kann der Vorformling (1) in Richtung auf den Gegenreflektor (60) bewegt werden bis zum Erreichen seiner Sollpositionierung. Zum Beispiel kann der Mündungsreflektor (72) so dimensioniert sein, dass der Vorformling (1) mit seinem Neckring darauf abstützend aufliegen kann. Fig. 10a deutet an, wie der Vorformling (1) in Richtung auf den Gegenreflektor (60) bewegt werden kann. Dies erfolgt z.B. im Bereich der Übergaberäder (35, 29), z.B. unterstützt durch Greifzangen oder andere Handhabungsmittel.

Die in Fig. 10b gezeigte Positionierung wird eingenommen, wenn die Übergabe auf das Transport- und Handhabungsmittel (33, 41) teilweise abgeschlossen ist. Der Neckring des Vorformlings (1) liegt auf dem Mündungsreflektor (72) auf. Der Kopf (43) der Haltevorrichtung (41) ist allerdings noch nicht abgesenkt. Dies erfolgt erst im Übergang zu der in Fig. 10c dargestellten Positionierung. Der Kopf (43) befindet sich in dieser Positionierung im Mündungsabschnitt (21) des Vorformlings (1) und kann diesen nunmehr klemmend haltern.

Die in Fig. 10c dargestellte Positionierung entspricht dabei der gewünschten Positionierung im Bereich der Heizstrecke (24). Der Mündungsreflektor (72) kann z.B. im Bereich der Heizstrecke (24) von einem dort feststehend angeordneten weiteren Mündungsreflektorelement zu einem weitgehend geschlossenen Mündungsreflektor ergänzt werden. Demgegenüber zeigen die Figuren 10a und 10b Positionierungen im Übergabebereich des Transportweges (301) der Vorformlinge (1).

In der dargestellten Ausführungsform ist der Mündungsreflektor (72) einstückig mit dem Gegenreflektor (60) ausgebildet. Er kann aber auch als getrenntes Element ausgeführt sein und an dem Gegenreflektor (60) befestigt sein. Dies kann auch in verschieblicher Art ausgeführt sein, z.B. in dem der Mündungsreflektor (72) in radialer Richtung in eine vorformlingsabgewandte Richtung verschieblich gelagert ist. Dies kann z. B. entgegen einer Federkraft erfolgen, die den Mündungsreflektor (72) in eine Sollpositionierung drückt. Eine solche Verschieblichkeit kann insbesondere dann sinnvoll sein, wenn anderenfalls im Übergabebereich Kollisionen mit anderen Handhabungsmitteln zu befürchten sind.

Die Figuren 7 und 9 zeigen eine Beweglichkeit des Gegenreflektors (60) relativ zum Transportelement (33) in radialer bzw. in vertikaler Richtung. Es sind auch Mischformen aus diesen beiden getrennt gezeigten Bewegungsrichtungen denkbar. Die gezeigten Bewegungsmuster erweisen sich aber als besonders einfach und werden daher als bevorzugte Relativbewegungen angesehen.

Es ist auch denkbar, die zu den Figuren 7 - 9 erläuterte Relativbewegung zwischen Transportelement (33) und Gegenreflektor (60) und die anhand der Figuren 10a bis 10c dargestellten besonderen Ausführungsform des Mündungsreflektors (72) zu kombinieren.

## Patentansprüche

1. Aufheizvorrichtung (300) mit mehreren Heizeinrichtungen (30) zur Temperaturkonditionierung von aus einem thermoplastischen Material bestehenden Vorformlingen (1) auf eine für eine Blasumformung geeignete Temperatur und Temperaturverteilung, wobei die Aufheizvorrichtung (300) Transport- und Handhabungsmittel (33, 41) für den Transport und die Handhabung der Vorformlinge (1) durch die Aufheizvorrichtung (300) entlang eines Transportweges (301) aufweist, wobei die Vorformlinge (1) dabei eine Bewegungsbahn überstreichen und wobei die Transport- und Handhabungsmittel (33, 41) als auf einer umlaufenden Kettenbahn (301) geführte Transportkette mit mehreren kettengliedartig zu der Transportkette verbundenen Transportmitteln (33) ausgeführt sind, wobei die Transportmittel (33) jeweils ein Handhabungsmittel (41) für die Vorformlinge haltern, wobei entlang einer Heizstrecke (24), die Teil dieses Transportweges (301) ist, die mehreren Heizeinrichtungen (30) in Transportrichtung hintereinanderliegend stationär angeordnet und wobei auf wenigstens einer den Heizeinrichtungen (30) gegenüberliegenden Seite Gegenreflektoren (60) vorgesehen sind, die im Bereich der Heizeinrichtungen (30) mit diesen zusammen einen tunnelartigen Heizbereich ausbilden, durch den hindurch die Vorformlinge (1) zum Zwecke der Aufheizung transportiert werden, wobei wenigstens im Bereich der Heizstrecke (24) jedem Vorformling (1) bzw. jedem Handhabungsmittel (41) ein mitlaufender Gegenreflektor (60) zugeordnet ist, der mit dem Vorformling (1) durch die Heizstrecke (24) mitlaufend ausgeführt ist, **dadurch gekennzeichnet, dass** die Gegenreflektoren (60) von den kettengliedartigen Transportmitteln (33) gehaltert sind, insbesondere daran befestigt sind, und sich in die Bewegungsbahn der Vorformlinge (1) diese in radialer Richtung teilumschließend hinein erstrecken.

2. Vorrichtung nach Anspruch 1, **dadurch gekennzeichnet, dass** die Gegenreflektoren (60) in axialer und/oder radialer Richtung beweglich von den Transportmitteln (33) gehaltert, insbesondere daran befestigt, ausgeführt sind.

3. Vorrichtung nach Anspruch 2, **dadurch gekennzeichnet, dass** die Transportmittel (33) Führungsmittel (70) aufweisen, an denen die Gegenreflektoren (60) in axialer Richtung verschieblich geführt sind und/oder an denen die Gegenreflektoren (60) in radialer Richtung verschieblich geführt sind.

4. Vorrichtung nach einem der Ansprüche 2 oder 3, **dadurch gekennzeichnet, dass** die Gegenreflektoren (60) federkraftbeaufschlagt in einer ersten Position gehalten und entgegen der Federkraft auslenkbar sind, insbesondere wobei die erste Position die Heizposition ist, in der die Gegenreflektoren (60) beim Bewegen durch den tunnelartigen Heizbereich vorformlingsnah angeordnet sind, und die Auslenkung bis in eine vorformlingsentferntere Position als die Heizposition erfolgt, insbesondere bis in eine Position, in der die Gegenreflektoren (60) sich nicht mehr bis in die Bewegungsbahn hinein erstrecken.

5. Vorrichtung nach einem der Ansprüche 2 bis 4, **gekennzeichnet durch** eine Kurvensteuerung mit einer stationären Steuerkurve und einer mit dem Gegenreflektor (60) umlaufenden Kurvenrolle (69), wobei die Kurvensteuerung derart ausgebildet und angeordnet ist, dass die Bewegung der Gegenreflektoren (60) in axialer und/oder in radialer Richtung in einem Bereich vor der Heizstrecke (24) ausgeführt wird zur Beladung der Handhabungsmittel (41) mit den Vorformlingen (1), insbesondere im Bereich der Umlenkung der umlaufenden Kettenbahn (301).

6. Vorrichtung nach einem der vorhergehenden Ansprüche, wobei die Transport- und Handhabungsmittel (33, 41) einen mitlaufenden und den Mündungsbereich (21) eines Vorformlings (1) abschirmenden Mündungsreflektor (72) aufweisen, **dadurch gekennzeichnet, dass** der Mündungsreflektor (72) radial nach außen U-förmig offen ausgebildet ist und insbesondere austauschbar und insbesondere in radialer Richtung nach innen verschieblich angeordnet ist.

7. Vorrichtung nach Anspruch 6, **dadurch gekennzeichnet, dass** der Mündungsreflektor (72) am Gegenreflektor (60) angeordnet und dadurch Teil des Gegenreflektors (60) ist.

8. Vorrichtung nach einem der vorhergehenden Ansprüche, **dadurch gekennzeichnet, dass** der Gegenreflektor (60) mit einem Schnellwechselsystem (71) an den Transportmitteln (33) befestigt ausgeführt ist, insbesondere mit einem werkzeuglos betätigbaren Schnellwechselsystem (71).

9. Blasformungsmaschine (100) mit Blasstationen (3) zur Blasumformung von Vorformlingen (1) in Behälter (2), **gekennzeichnet durch** eine Aufheizvorrichtung (300) nach einem der Ansprüche 1 bis 8.

10. Verfahren zur Temperaturkonditionierung von aus einem thermoplastischen Material bestehenden Vorformlingen (1) auf eine für eine Blasumformung geeignete Temperatur und Temperaturverteilung in einer Aufheizvorrichtung (300) mit mehreren Heizeinrichtungen (30), wobei die Aufheizvorrichtung (300) mehrere Transport- und Handhabungsmittel (33, 41) für den Transport und die Handhabung der Vorformlinge (1) durch die Aufheizvorrichtung (300) entlang eines Transportweges (301) aufweist, wobei die Vorformlinge (1) dabei eine Bewegungsbahn überstreichen und wobei die Transport- und Handhabungsmittel (33, 41) als auf einer umlaufenden Kettenbahn (301) geführte Transportkette mit mehreren kettengliedartig zu der Transportkette verbundenen Transportmittel (33) ausgeführt sind, wobei die Transportmittel (33) jeweils ein Handhabungsmittel (41) für die Vorformlinge (1) haltern, wobei entlang einer Heizstrecke (24), die Teil dieses Transportweges (301) ist, die mehreren Heizeinrichtungen (30) in Transportrichtung hintereinanderliegend stationär angeordnet und wobei auf wenigstens einer den Heizeinrichtungen (30) gegenüberliegenden Seite Gegenreflektoren (60) vorgesehen sind, die im Bereich der Heizeinrichtungen (30) mit diesen zusammen einen tunnelartigen Heizbereich ausbilden, durch den hindurch die Vorformlinge (1) zum Zwecke der Aufheizung transportiert werden, wobei wenigstens im Bereich der Heizstrecke (24) jedem Vorformling (1) bzw. jedem Transport- und Handhabungsmittel (33, 41) ein mitlaufender Gegenreflektor (60) zugeordnet wird, der mit dem Vorformling (1) mitlaufend durch die Heizstrecke (24) hindurch bewegt wird, **dadurch gekennzeichnet, dass** die Gegenreflektoren (60) von den kettengliedartigen Transportmitteln (33) gehaltert werden, insbesondere daran befestigt werden, werden und sich in die Bewegungsbahn der Vorformlinge (1) diese in radialer Richtung teilumschließend hinein erstrecken.

11. Verfahren nach Anspruch 10, **dadurch gekennzeichnet, dass** die Gegenreflektoren (60) während eines Umlaufs der Kettenbahn (301) in axialer und/oder radialer Richtung relativ zu den Transportmitteln (33) bewegt werden.

12. Verfahren nach Anspruch 10 oder 11, **dadurch gekennzeichnet, dass** die Transportmittel (33) Führungsmittel (70) aufweisen, an denen die Gegenreflektoren (60) in axialer Richtung geführt verschoben werden und/oder an denen die Gegenreflektoren (60) in radialer Richtung geführt verschoben werden.

13. Verfahren nach einem der vorhergehenden Ansprüche 10 bis 12, **dadurch gekennzeichnet, dass** die Gegenreflektoren (60) federkraftbeaufschlagt in einer ersten Position gehalten werden und entgegen der Federkraft ausgelenkt werden, insbesondere wobei die erste Position die Heizposition ist, in der die Gegenreflektoren (60) beim Bewegen durch den tunnelartigen Heizbereich vorformlingsnah angeordnet sind, und die Auslenkung bis in eine vorformlingsentferntere Position als die Heizposition erfolgt, insbesondere bis in eine Position, in der die Gegenreflektoren (60) sich nicht mehr bis in die Bewegungsbahn hinein erstrecken.

14. Verfahren nach einem der Ansprüche 11 bis 13, **gekennzeichnet durch** eine Kurvensteuerung mit einer stationären Steuerkurve und einer mit dem Gegenreflektor (60) umlaufenden Kurvenrolle (69), wobei die Gegenreflektoren kurvengesteuert ausgelenkt werden, wobei die Auslenkung insbesondere in einem Bereich vor der Heizstrecke (24) ausgeführt wird zur Beladung der Handhabungsmittel (41) mit den Vorformlingen (1), insbesondere im Bereich der Umlenkung der umlaufenden Kettenbahn (301).

## Claims

1. A heating device (300) comprising several heating means (30) for temperature conditioning preforms (1) made of a thermoplastic material to a temperature and temperature distribution suitable for a blow moulding, wherein the heating device (300) has transport and handling means (33, 41) for transporting and handling the preforms (1) through the heating device (300) along a transport path (301), wherein the preforms (1) thereby sweep over a movement path, and wherein the transport and handling means (33, 41) are designed as a transport chain guided on a revolving chain path (301) comprising several transport means (33), which are connected to form the transport chain in a chain link-like manner, wherein the transport means (33) in each case support a handling means (41) for the preforms, wherein the several heating means (30) are arranged so as to be stationarily located one behind the other in the transport direction along a heating section (24), which is part of this transport path (301), and wherein on at least one side located opposite the heating means (30), counter reflectors (60) are provided, which, in the region of the heating means (30), form a tunnel-like heating region together with said heating means, through which the preforms (1) are transported for heating purposes, wherein at least in the region of the heating section (24), a co-travelling counter reflector (60), which is designed to co-travel with the preform through the heating section (24), is assigned to each preform (1) or to each handling means (41), respectively, **characterised in that** the counter reflectors (60) are supported by the chain link-like transport means (33), in particular fastened thereto, and extend into the movement path of the preforms (1) partially enclosing the latter in the radial direction.

2. The device according to claim 1, **characterised in that** the counter reflectors (60) are designed so as to be movably supported by the transport means (33) in the axial and/or radial direction, in particular so as to be fastened thereto.

3. The device according to claim 2, **characterised in that** the transport means (33) have guide means (70), on which the counter reflectors (60) are displaceably guided in the axial direction and/or on which the counter reflectors (60) are displaceably guided in the radial direction.

4. The device according to any one of claims 2 or 3, **characterised in that** the counter reflectors (60) are supported in a first position under the action of a spring force and can be deflected against the spring force, in particular wherein the first position is the heating position, in which the counter reflectors (60) are arranged close to the preforms when moving through the tunnel-like heating region, and the deflection occurs into a position farther from the preforms than the heating position, in particular into a position, in which the counter reflectors (60) no longer extend into the movement path.

5. The device according to any one of claims 2 to 4, **characterised by** a cam controller comprising a stationary control cam and a cam roller (69) revolving with the counter reflector (60), wherein the cam control is formed and arranged in such a way that the movement of the counter reflectors (60) is carried out in the axial and/or in the radial direction in a region upstream of the heating section (24) for loading the handling means (41) with the preforms (1), in particular in the region of the deflection of the revolving chain path (301).

6. The device according to any one of the preceding claims, wherein the transport and handling means (33, 41) have a co-traveling mouth reflector (72), which shields the mouth region (21) of a preform (1), **characterised in that** the mouth reflector (72) is formed to be open radially outwards in a U-shaped manner, and is arranged in particular exchangeably and in particular displaceably inwards in the radial direction.

7. The device according to claim 6, **characterised in that** the mouth reflector (72) is arranged at the counter reflector (60) and is thus part of the counter reflector (60).

8. The device according to any one of the preceding claims, **characterised in that** the counter reflector (60) is designed to be attached to the transport means (33) by means of a quick-change system (71), in particular by means of a quick-change system (71), which can be operated without tools.

9. A blow moulding machine (100) comprising blowing stations (3) for blow moulding preforms (1) into containers (2), **characterised by** a heating device (300) according to any one of claims 1 to 8.

10. A method for temperature conditioning of preforms (1) made of a thermoplastic material to a temperature and temperature distribution suitable for blow moulding in a heating device (300) comprising several heating means (30), wherein the heating device (300) has several transport and handling means (33, 41) for transporting and handling the preforms (1) through the heating device (300) along a transport path (301), wherein the preforms (1) thereby sweep over a movement path, and wherein the transport and handling means (33, 41) are designed as a transport chain guided on a revolving chain path (301) comprising several transport means (33), which are connected to form the transport chain in a chain link-like manner, wherein the transport means (33) in each case support a handling means (41) for the preforms (1), wherein the several heating means (30) are arranged so as to be stationarily located one behind the other in the transport direction along a heating section (24), which is part of this transport path (301), and wherein on at least one side located opposite the heating means (30), counter reflectors (60) are provided, which, in the region of the heating means (30), form a tunnel-like heating region together with said heating means, through which the preforms (1) are transported for heating purposes, wherein at least in the region of the heating section (24), a co-travelling counter reflector (60), which is moved through the heating section (24) so as to co-travel with the preform (1), is assigned to each preform (1) or to each transport and handling means (33, 41), respectively, **characterised in that** the counter reflectors (60) are supported by the chain link-like transport means (33), in particular fastened thereto, and extend into the movement path of the preforms (1) partially enclosing the latter in the radial direction.

11. The method according to claim 10, **characterised in that** the counter reflectors (60) are moved relative to the transport means (33) in the axial and/or radial direction during a revolution of the chain path (301).

12. The method according to claim 10 or 11, **characterised in that** the transport means (33) have guide means (70), on which the counter reflectors (60) are displaced so as to be guided in the axial direction and/or on which the counter reflectors (60) are displaced so as to be guided in the radial direction.

13. The method according to any one of the preceding claims 10 to 12, **characterised in that** the counter reflectors (60) are supported in a first position under the action of a spring force and are deflected against the spring force, in particular wherein the first position is the heating position, in which the counter reflectors (60) are arranged close to the preforms when moving through the tunnel-like heating region, and the deflection occurs into a position further away from the preforms than the heating position, in particular into a position, in which the counter reflectors (60) no longer extend into the movement path.

14. The method according to any one of claims 11 to 13, **characterised by** a cam controller comprising a stationary control cam and a cam roller (69) revolving with the counter reflector (60), wherein the counter reflectors are deflected in a cam-controlled manner, wherein the deflection is in particular carried out in a region upstream of the heating section (24) for loading the handling means (41) with the preforms (1), in particular in the region of the deflection of the revolving chain path (301).

## Revendications

1. Dispositif d'échauffement (300) avec plusieurs dispositifs de chauffage (30) pour le conditionnement thermique de préformes (1) en un matériau thermoplastique les amenant à une température et une distribution de températures appropriées au moulage par soufflage, le dispositif d'échauffement (300) présentant des moyens de transport et de manipulation (33, 41) pour le transport et la manipulation des préformes (1) à travers le dispositif d'échauffement (300) le long d'un parcours (301), les préformes (1) parcourant un trajet et les moyens de transport et de manipulation (33, 41) étant réalisés sous forme de chaîne de transport guidée le long d'un transporteur à chaîne (301) en rotation et constitué de plusieurs moyens de transport (33) reliés entre eux à l'instar des maillons d'une chaîne, les moyens de transport (33) portant respectivement un moyen de manipulation (41) pour les préformes, les dispositifs de chauffage (30) étant agencés de façon stationnaire l'un derrière l'autre dans le sens du transport le long d'une section de chauffage (24) qui fait partie de ce parcours (301) et des contre-réflecteurs (60) étant prévus sur au moins un côté opposé aux dispositifs de chauffage (30), ces contre-réflecteurs (60) formant avec les dispositifs de chauffage (30) une zone de chauffage de type tunnel à travers lequel les préformes (1) sont transportées pour être réchauffées, un contre-réflecteur (60) étant, au moins au niveau de la section de chauffage (24), affecté à chaque préforme (1) ou à chaque moyen de manipulation (41), ce contre-réflecteur (60) étant réalisé de façon à se déplacer avec la préforme (1) à travers la section de chauffage (24), **caractérisé en ce que** les contre-réflecteurs (60) sont maintenus par les moyens de transport (33) formant un enchaînement et y sont notamment fixés et s'étendent dans le trajet des préformes (1) qu'ils entourent partiellement en sens radial.

2. Dispositif selon la revendication 1, **caractérisé en ce que** les contre-réflecteurs (60) sont maintenus par les moyens de transport (33), et y sont notamment fixés, de façon mobile en sens axial et/ou radial.

3. Dispositif selon la revendication 2, **caractérisé en ce que** les moyens de transport (33) présentent des moyens de guidage (70) dans lesquels les contre-réflecteurs (60) sont guidés de façon à pouvoir être déplacés en sens axial et/ou en sens radial.

4. Dispositif selon l'une des revendications 2 ou 3, **caractérisé en ce que** les contre-réflecteurs (60) sont maintenus en une première position sous l'action d'une force de ressort et peuvent pivoter contre la force de ressort, la première position étant notamment la position de chauffage dans laquelle les contre-réflecteurs (60) sont agencés à proximité des préformes (1) lors du déplacement à travers le tunnel formé par la section de chauffage et le pivotement ayant lieu jusqu'à une position plus éloignée des préformes (1) que la position de chauffage, notamment jusqu'à une position dans laquelle les contre-réflecteurs (60) ne s'étendent plus dans le trajet des préformes (1).

5. Dispositif selon l'une des revendications 2 à 4, **caractérisé par** une commande à came avec une came stationnaire avec un galet de came (69) circulant avec le contre-réflecteur (60), la commande à came étant conçue et agencée de façon à ce que le mouvement des contre-réflecteurs (60) en sens axial et/ou en sens radial ait lieu dans une zone devant la section de chauffage (24) en vue du chargement des préformes (1) dans les moyens de manipulation (41), notamment dans la zone de renvoi du transporteur à chaîne (301) en circulation.

6. Dispositif selon l'une des revendications précédentes, les moyens de transport et de manipulation (33, 41) présentant un réflecteur d'embouchure (72) se déplaçant avec le dispositif et formant écran pour la section d'embouchure (21) d'une préforme (1), **caractérisé en ce que** le réflecteur d'embouchure (72) a une forme en U ouverte radialement vers l'extérieur et est notamment interchangeable et notamment agencé de façon à pouvoir être déplacé en sens radial vers l'intérieur.

7. Dispositif selon la revendication 6, **caractérisé en ce que** le réflecteur d'embouchure (72) est fixé au contre-réflecteur (60) et, de ce fait, fait partie du contre-réflecteur (60).

8. Dispositif selon l'une des revendications précédentes, **caractérisé en ce que** le contre-réflecteur (60) est fixé aux moyens de transport (33) à l'aide d'un système à changement rapide (71), notamment à l'aide d'un système à changement rapide (71) pouvant être actionné sans outils.

9. Machine de moulage par soufflage (100) avec des stations de soufflage (3) pour la transformation par soufflage de préformes (1) en récipients (2), **caractérisée par** un dispositif d'échauffement (300) selon l'une des revendications 1 à 8.

10. Procédé de conditionnement thermique de préformes (1) en un matériau thermoplastique les amenant dans un dispositif d'échauffement (300) avec plusieurs dispositifs de chauffage (30) à une température et une distribution de températures appropriées au moulage par soufflage, le dispositif d'échauffement (300) présentant plusieurs moyens de transport et de manipulation (33, 41) pour le transport et la manipulation des préformes (1) à travers le dispositif d'échauffement (300) le long d'un parcours (301), les préformes (1) parcourant un trajet et les moyens de transport et de manipulation (33, 41) étant réalisés sous forme de chaîne de transport guidée le long d'un transporteur à chaîne (301) en rotation et constitué de plusieurs moyens de transport (33) reliés entre eux à l'instar des maillons d'une chaîne, les moyens de transport (33) portant respectivement un moyen de manipulation (41) pour les préformes (1), les dispositifs de chauffage (30) étant agencés de façon stationnaire l'un derrière l'autre dans le sens du transport le long d'une section de chauffage (24) qui fait partie de ce parcours (301) et des contre-réflecteurs (60) étant prévus sur au moins un côté opposé aux dispositifs de chauffage (30), ces contre-réflecteurs (60) formant avec les dispositifs de chauffage (30) une zone de chauffage de type tunnel à travers lequel les préformes (1) sont transportées pour être réchauffées, un contre-réflecteur (60) étant, au moins au niveau de la section de chauffage (24), affecté à chaque préforme (1) ou à chaque moyen de manipulation (41), ce contre-réflecteur (60) étant déplacé avec la préforme (1) à travers la section de chauffage (24), **caractérisé en ce que** les contre-réflecteurs (60) sont maintenus par les moyens de transport (33) formant un enchaînement et y sont notamment fixés et s'étendent dans le trajet des préformes (1) qu'ils entourent partiellement en sens radial.

11. Procédé selon la revendication 10, **caractérisé en ce que** les contre-réflecteurs (60) sont déplacés en sens radial et/ou axial par rapport aux moyens de transport (33) pendant une rotation du transporteur à chaîne (301).

12. Procédé selon la revendication 10 ou 11, **caractérisé en ce que** les moyens de transport (33) présentent des moyens de guidage (70) dans lesquels les contre-réflecteurs (60) sont guidés de façon à être déplacés en sens axial et/ou guidés de façon à être déplacés en sens radial.

13. Film selon l'une des revendications précédentes 10 à 12, **caractérisé en ce que** les contre-réflecteurs (60) sont maintenus en une première position sous l'action d'une force de ressort et pivotent contre la force de ressort, la première position étant notamment la position de chauffage dans laquelle les contre-réflecteurs (60) sont agencés à proximité des préformes (1) lors du déplacement à travers le tunnel formé par la section de chauffage et le pivotement ayant lieu jusqu'à une position plus éloignée des préformes (1) que la position de chauffage, notamment jusqu'à une position dans laquelle les contre-réflecteurs (60) ne s'étendent plus dans le trajet des préformes (1).

14. Procédé selon l'une des revendications 11 à 13, **caractérisé par** une commande à came avec une came stationnaire et un galet de came (69) circulant avec le contre-réflecteur (60), le pivotement des contre-réflecteurs étant commandé par une came et ayant notamment lieu dans une zone devant la section de chauffage (24) en vue du chargement des préformes (1) dans les moyens de manipulation (41), notamment dans la zone de renvoi du transporteur à chaîne (301) en circulation.
